# EUROPÄISCHE PATENTSCHRIFT

(11) **EP 1 290 332 B1**
(45) Veröffentlichungstag und Bekanntmachung des Hinweises auf die Patenterteilung: **16.08.2006**
(21) Anmeldenummer: 01915405.3
(22) Anmeldetag: 23.03.2001
(51) Int. Cl.: F02M 35/024

(54) **LUFTFILTERSYSTEM**
AIR-FILTRATION SYSTEM
SYSTEME DE FILTRE A AIR

(30) Priorität: 16.06.2000 DE 10028956
(43) Veröffentlichungstag der Anmeldung: 12.03.2003
(73) Patentinhaber: Mann + Hummel GmbH, 71638 Ludwigsburg (DE)
(72) Erfinder: SCHENK, Herbert, 71726 Benningen (DE); REINHOLD, Thomas, E-50011 Zaragoza (ES); AISA, Manuel, E-50014 Zaragoza (ES)
(74) Vertreter: Voth, Gerhard
(86) Internationale Anmeldenummer: PCT/EP2001/003298
(87) Internationale Veröffentlichungsnummer: WO 2001/096729

(56) Entgegenhaltungen:
- EP-A- 0 789 141
- DE-A- 3 429 633
- DE-A- 4 403 219
- DE-A- 19 650 806
- DE-A- 19 802 074
- US-A- 5 609 658

## Beschreibung

### Stand der Technik

Die Erfindung betrifft ein Luftfiltersystem nach dem Oberbegriff des Patentanspruches 1.

Das Dokument US 5,609,658 offenbart ein Luftfiltersystem für eine Brennkraftmaschine. Das Luftfiltersystem weist eine Systemplatte auf, an welcher Halbschalen zur Bildung eines Rohlufteinlasses angeordnet sind. Der Rohlufteinlass mündet in einen Filterraum, in welchem ein Filterelement zur Reinigung der Luft angeordnet ist.

Es ist aus der DE 198 02 074 ein Ansaugmodul für eine Brennkraftmaschine bekannt, welches über eine Vielzahl an integrierten Komponenten, wie z.B. eine Rohluftansaugöffnung, einen Rohluftansaugkanal, einen Luftfilter, einen Reinluftkanal und einen Reinluftstutzen verfügt. Das Ansaugmodul ist in seinen Dimensionen derart gestaltet, dass es die Brennkraftmaschine vollständig überdeckt. Hierzu ist eine flächig ausgebildete Platte vorgesehen, welche an ihrer Unterseite über angeformte Verbindungskonturen verfügt. Auf die Unterseite der Platte wird ein Unterteil aufgebracht, welches auf die Verbindungskonturen aufgesetzt und mit mehreren Schrauben mit der Platte verbunden wird. Zur dichtenden Verbindung der Platte mit dem Unterteil ist eine Dichtung zwischen Platte und Unterteil eingebracht.

Das Verschrauben des Oberteils mit dem Unterteil sowie das Einbringen der Dichtung esrfordem jedoch einen erheblichen Material- und Montageaufwand. Weiterhin ist die Platte durch die angeformten Verbindungskonturen ein sehr aufwendiges und somit schwer zu produzierendes Bauteil.

Aufgabe der Erfindung ist es daher, ein Luftfiltersystem, insbesondere für eine Brennkraftmaschine zu schaffen, welches mit einem geringeren Material- und Montageaufwand einfach hergestellt werden kann. Diese Aufgabe wird durch die Merkmale des Patentanspruches 1 gelöst.

### Vorteile der Erfindung

Das erfindungsgemäße Luftfiltersystem weist eine Systemplatte mit einer Oberseite und einer Unterseite auf, welche eine Vorrichtung wie z.B. eine Brennkraftmaschine ganz oder zumindest teilweise abdeckt. Weiterhin umfasst das Luftfiltersystem einen Rohlufteinlass und eine Rohseite, welche in einen Filterraum mündet. In dem Filterraum ist ein Filterelement angeordnet, welches die Rohseite dichtend von einer Reinseite mit einem Reinluftauslass trennt. Das Filterelement kann z.B. durch ein zick-zack-förmig gefaltetes Filtermedium mit einer umlaufenden Dichtung oder durch ein Filtervlies gebildet werden. Bei besonderen Ausführungen kann die Oberseite der Systemplatte optisch ansprechend und die Unterseite der Systemplatte funktionsorientiert gestaltet sein.

Der Rohlufteinlass mündet in die Rohseite, welche durch eine erste Halbschale in Verbindung mit der Systemplatte gebildet ist. Die erste Halbschale ist dichtend mit der Unterseite der Systemplatte verbunden, wodurch die Rohseite definiert wird. In Teilbereichen, insbesondere im Bereich des Rohlufteinlasses kann die erste Halbschale einen geschlossenen Kanal bilden, wodurch sich z.B. der Rohlufteinlass von der Systemplatte abheben kann. Die Verbindung der ersten Halbschale mit der Unterseite der Systemplatte ist eine unlösbare Verbindung, welche thermisch oder chemisch durch z.B. Kleben erzeugt sein kann. Hierbei ist die Verwendung einer zusätzlichen Dichtung nicht erforderlich, da die Verbindung selbst dichtet. Die Dichtung erfolgt z.B. durch den aufgetragenen Klebstoff. Durch die unlösbare Verbindung der Systemplatte mit der ersten Halbschale können mechanische Befestigungsmittel und Dichtungen eingespart werden.

Der Filterraum, wird durch ein Filtergehäuse gebildet, welches mit der Systemplatte verbunden ist. Hierbei kann das Filtergehäuse z.B. ein in sich geschlossenes Filtergehäuse mit Öffnungen sein, weiche Rohluft in den Filterraum eintreten und Reinluft austreten lassen. Hierbei ist dann eine Gehäuseseite fest mit der Systemplatte verbunden. Die Öffnung in dem Filtergehäuse für den Eintritt der Rohluft kann lösbar oder unlösbar mit der, die Rohseite umschließende erste Halbschale verbunden sein.

Die Reinseite ist abströmseitig des Filterelementes mit dem Filterraum verbunden, wobei sie z.B. ausschließlich mit dem Filtergehäuse verbunden sein kann und keinen Kontakt zu der Systemplatte besitzt. Hierbei kann die Reinseite z.B. als Stutzen mit einem beliebigen Querschnitt ausgeführt sein, welcher direkt von dem Filtergehäuse ausgeht.

Das Filtergehäuse ist unlösbar mit der Systemplatte verbunden. Hierbei können thermische oder chemische Verbindungsverfahren zur unlösbaren Verbindung zwischen dem Filtergehäuse und der Systemplatte verwendet werden. Die Verbindung zwischen der Systemplatte und dem Filtergehäuse kann mit demselben Verbindungsverfahren hergestellt sein, wie die Verbindung zwischen der ersten Halbschale und der Systemplatte. Somit können die erste Halbschale und das Filtergehäuse in einem Arbeitsschritt mit der Systemplatte verbunden werden, wodurch in der Montage des Luftfiltersystems eine Zeitersparnis erzielt wird.

Gemäß einer weiteren Ausgestaltung der Erfindung ist die Reinseite durch eine zweite Halbschale in Verbindung mit der Systemplatte gebildet. Hierbei kann die zweite Halbschale mit dem Filtergehäuse verbunden oder einteilig ausgeführt sein und an die Öffnung für die Reinluft in dem Filtergehäuse anschließen oder durch ausschließlichen Kontakt zu der Systemplatte mit dem abstromseitigen Filterraum korrespondieren, wodurch die gereinigte Luft durch einen Durchbruch in der Systemplatte hindurch zum Reinluftauslass strömt. Bei dieser Ausgestaltung ist die Öffnung für die Reinluft derart an dem Filtergehäuse angeordnet, dass sie sich auf der mit der Systemplatte verbundenen Seite befindet und den Durchbruch in der Systemplatte überdeckt. Die zweite Halbschale kann dann auf der Oberseite der Systemplatte angeordnet sein, wodurch die Reinluft auf der Oberseite der Systemplatte entlang geleitet werden kann. Durch diese Ausgestaltung sind diverse Luftführungsvarianten ermöglicht, welche auf engstem Bauraum realisierbar sind.

Schließt die zweite Halbschale sowohl an das Filtergehäuse als auch an die Unterseite der Systemplatte an, so muss die Öffnung für die Reinluft im Filtergehäuse derart angeordnet sein, dass sie in die zweite Halbschale mündet. Somit sind besondere Luftführungsmöglichkeiten realisierbar, bei welchen den Rohlufteinlass, sowie der Reinluftauslass auf der Unterseite der Systemplatte angeordnet sind.

Bei einer besonderen Ausführungsform der Erfindung ist die unlösbare Verbindung eine Schweißnaht. Diese Schweißnaht kann z.B. im Vibrationsschweißverfahren oder Ultraschallsschweißverfahren erzeugt sein. Beim Verschweißen der Bauteile miteinander wird Material aufgeschmolzen, welches die Schweißnaht bildet. Somit können Toleranzen ausgeglichen werden, wodurch eine dichtende Verbindung mit geringem Montageaufwand schnell und zuverlässig erzeugt werden kann.

Gemäß einer weiteren Ausgestaltung ist das Filtergehäuse durch einen Gehäuserahmen mit einem Gehäusedeckel und die Systemplatte gebildet. Der Gehäuserahmen ist mit der Unterseite der Systemplatte verschweißt. Somit bildet die Unterseite der Systemplatte einen Teil des Filtergehäuses. Der Gehäusedeckel ist dichtend mit dem Gehäuserahmen verbunden, wodurch keine Luft aus dem Filtergehäuse entweichen oder in das Filtergehäuse eintreten kann. Zur dichtenden Verbindung zwischen dem Gehäuserahmen und dem Gehäusedeckel können Dichtmittel, insbesondere Gummidichtungen vorgesehen sein. Weiterhin kann der Gehäusedeckel lösbar mit dem Filterrahmen verbunden sein, wodurch das in dem Filtergehäuse angeordnete Filterelement bei Bedarf ausgetauscht werden kann. Der Gehäusedeckel kann bei vorteilhaften Ausführungen mit dem Gehäuserahmen lösbar verschnappt sein, wodurch der Gehäusedeckel schnell und einfach von dem Gehäuserahmen entfernbar ist.

Es ist vorteilhaft, an der Systemplatte Rippen anzuordnen. Um die Verbindung zwischen der Systemplatte und der ersten Halbschale zu optimieren, können an der Unterseite der Systemplatte Rippen vorgesehen sein, welche insbesondere schmal und flach ausgeführt sein können. Die Rippen können geradlinig oder gebogen verlaufen, wobei sie bei besonderen Ausführungen der Kontur von den, mit der Systemplatte verbundenen Bauteilen folgen können. Durch die Ausbildung von Rippen erhält die Systemplatte zusätzliches Material, welches z.B. beim Schweißen aufgeschmolzen werden kann oder eine zusätzliche Anlagefläche beim Kleben bietet. Außerdem erhöhen diese Rippen zusätzlich die Eigenstabilität der Systemplatte.

Gemäß einer vorteilhaften Ausbildung der Erfindung verfügt die Rohseite über einen akustisch wirksamen Luftführungsbogen. Hierbei ist die erste Halbschale, welche die Rohseite umschließt, derart ausgebildet, dass sie den akustisch wirksamen Luftführungsbogen in seinem Verlauf bildet. Es können auch mehrere Luftführungsbögen vorgesehen sein, welche die von der durchströmenden Luft erzeugten Geräusche positiv beeinflussen, wobei eine Geräuschreduzierung oder eine Frequenzänderung bewirkt werden kann. Eine besonders vorteilhafte Ausführung des Luftführungsbogens stellt ein Omegabogen dar.

Bei einer weiteren Ausgestaltung der Erfindung verfügt die Rohseite über einen zweiten Rohlufteinlass, welcher mittels einer Klappe öffenbar ist. Bei dieser Ausgestaltung kann die erste Halbschale derart ausgebildet sein, dass sie zusätzlich den zweiten Rohlufteinlass bildet. Hierbei ist die Klappe, derart in der ersten Halbschale angeordnet, dass sie durch entsprechende Schaltstellungen entweder den ersten Rohlufteinlass oder den zweiten Rohlufteinlass abtrennen kann. Außerdem ist eine Schaltstellung denkbar, in welcher die Klappe beide Rohlufteinlässe, zumindest teilweise frei gibt. Die Klappe ist insbesondere in dem Bereich angeordnet, wo die Rohseite, welche von dem ersten Rohlufteinlass ausgeht, mit der Rohseite, welche von dem zweiten Rohlufteinlass ausgeht, zusammentrifft. Bei anderen Ausführungen können auch zwei separate Klappen vorgesehen sein, wobei eine erste Klappe zum Verschließen des ersten Rohlufteinlasses und wobei die zweite Klappe zum Verschließen des zweiten Rohlufteinlasses dient. Die beiden Klappen verfügen vorteilhafterweise über eine Verbindung, welche die Klappen in gegenseitiger Abhängigkeit steuert. Durch die Verwendung eines öffenbaren zweiten Rohlufteinlass kann Luft aus einer anderen Umgebung angesaugt werden, dies ist insbesondere bei Kraftfahrzeugen vorteilhaft, da wenn der erste Rohlufteinalss z.B. mit Wasser oder Schnee in Berührung kommt, die Klappe diesen Rohlufteinlass verschließen und den zweiten Rohlufteinlass freigeben kann, wodurch z.B. warme Luft aus dem Motorraum angesaugt werden kann und die Brennkraftmaschine ohne Gefahr arbeiten kann.

Eine weitere Ausgestaltung sieht Befestigungspunkte zur Fixierung des Luftfiltersystems an einer angrenzenden Brennkraftmaschine vor. Die Befestigungspunkte können an der Systemplatte oder an den, mit der Systemplatte verbundenen Bauteile angeordnet sein, wobei die Befestigungspunkte direkt angeformt oder als separates Bauteil, insbesondere aus Gummi, ausgeführt sein können. Es sind mehrere Befestigungspunkte, welche über das Luftfiltersystem verteilt angeordnet sein können vorzusehen. Sind die Befestigungspunkte separat ausgeführt, so können sie neben der Befestigungsfunktion z.B. auch als Schwingungsdämpfer oder Distanzstück zwischen der Brennkraftmaschine und dem Luftfiltersystem dienen, wodurch das Luftfiltersystem keinen zu extremen mechanischen oder thermischen Belastungen ausgesetzt wird.

Bei einer vorteilhaften Ausbildung der Erfindung bestehen die Halbschalen und die Systemplatte aus thermoplastischem Kunststoff. Somit können die einzelnen Bauteile des Luftfiltersystems einfach und schnell im Spritzgußverfahren hergestellt werden und die Montage der Bauteile kann z.B. im Reibschweißverfahren erfolgen. Außerdem kann das Luftfiltersystem nach Gebrauch einfach entsorgt oder recycled werden.

### Zeichnung

Weitere Einzelheiten der Erfindung werden in der Zeichnung anhand von schematischen Ausführungsbeispielen beschrieben. Hierbei zeigt
- Figur 1: ein Luftfiltersystem,
- Figur 2: ein Luftfiltersystem im Schnitt entlang der Schnittlinie A-A gemäß Figur 1
- Figur 3: ein Luftfiltersystem in einer Variante in perspektivischer Darstellung,
- Figur 4: ein Luftfiltersystem im Schnitt entlang der Schnittlinie B-B gemäß Figur 3,
- Figur 5: ein Luftfiltersystem im Schnitt entlang der Schnittlinie C-C gemäß Figur 3 und
- Figur 6: ein Luftfiltersystem im Schnitt entlang der Schnittlinie D-D gemäß Figur 3.

### Beschreibung der Ausführungsbeispiele

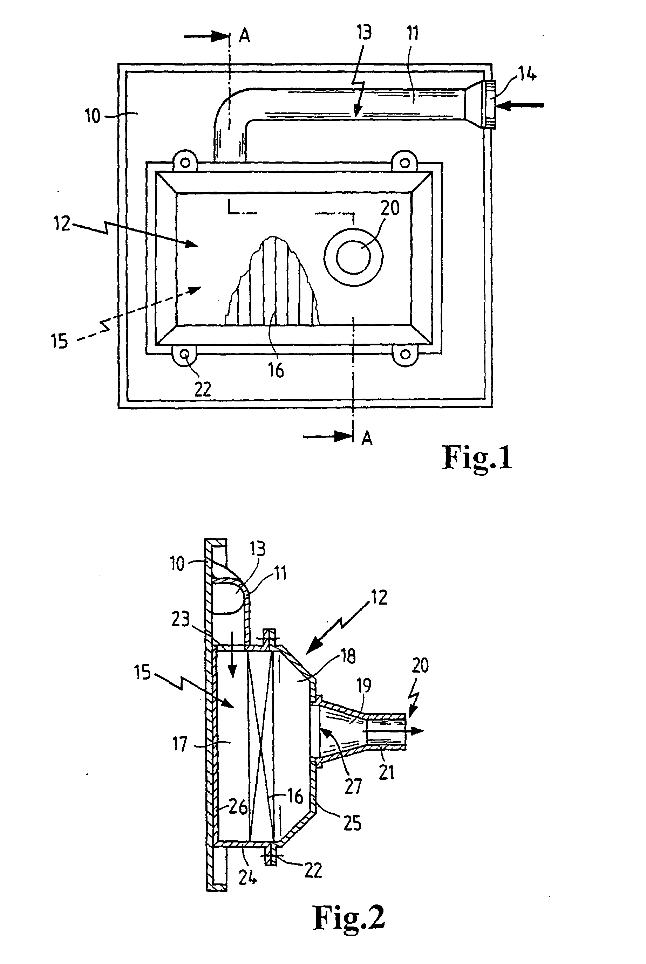

In Figur 1 ist ein Luftfiltersystem in der Draufsicht dargestellt. Das Luftfiltersystem weist eine Systemplatte 10 auf, welche mit einer ersten Halbschale 11 und einem Filtergehäuse 12 unlösbar verbunden ist. Die erste Halbschale 11 schließt in Verbindung mit der Systemplatte 10 eine Rohseite 13 ein. Die Rohseite 13 verfügt einerseits über einen Rohlufteinlass 14 und ist andererseits mit dem Filtergehäuse 12 verbunden. Das Filtergehäuse 12 umschließt gemäß Figur 2 einen Filterraum 15, welcher von einem Filterelement 16 in einen Rohraum 17 und einen Reinraum 18 unterteilt wird. Das Filterelement 16 ist dichtend in das Filtergehäuse 12 eingebracht. Bei diesem Ausführungsbeispiel schließt an den Reinraum 18 eine Reinseite 19 mit einem Reinluftauslass 20 an. Die Reinseite 19 wird von einem Stutzen 21 gebildet, welcher fest mit dem Filtergehäuse 12 verbunden ist. Damit das Filterelement 16 bei Bedarf ausgetauscht werden kann, ist das Filtergehäuse zweiteilig ausgeführt, wobei die beiden Gehäuseteile mittels Schrauben 22 lösbar verbunden sind.

Das Luftfiltersystem saugt Luft aus der Umgebung Luft an. Diese Luft strömt durch den Rohlufteinlass 14 auf die Rohseite13. Durch eine erste Öffnung 23 (gemäß Figur 2) im Filtergehäuse 12, weiche von der Rohseite 13 vollständig überdeckt ist, strömt die Luft in den Rohraum 17 (gemäß Figur 2) des Filterraumes 15. Damit die Luft in den Reinraum 18 (gemäß Figur 2) gelangt, muss sie durch das Filterelement 16 hindurchströmen, wo sie gereinigt wird. Vom Reinraum 18 strömt die Luft auf die Reinseite 19 und tritt durch den Reinluftauslass 20 aus dem Luftfiltersystem aus.

In Figur 2 ist ein Luftfiltersystem entlang der Schnittlinie A-A gemäß Figur 1 dargestellt. Der Figur 1 entsprechende Bauteile sind mit gleichen Bezugszeichen versehen. Die erste Halbschale 11 ist mit der Systemplatte 10 dichtend verschweißt, wodurch die Rohseite 13 gebildet wird. Das Filtergehäuse 12 besteht aus einem Unterteil 24 und einem Gehäusedeckel 25. Der Gehäusedeckel 25 ist mit Schrauben 22 lösbar mit dem Unterteil 24 verbunden. Das Unterteil 24 besitzt einen Gehäuseboden 26, welcher unlösbar mit der Systemplatte 10 verbunden ist, weiterhin umschließt das Unterteil 24 den Rohraum 17, wobei in dem Unterteil 24 eine erste Öffnung 23 vorgesehen ist, welche von der ersten Halbschale 11 mit der Systemplatte 10 umschlossen ist. Durch diese erste Öffnung 23 kann die Luft von der Rohseite 13 in den Rohraum 17 strömen. Das Filtergehäuse 12 weist noch eine zweite Öffnung 27 auf, welche in dem Gehäusedeckel 25 angeordnet ist. Durch diese zweite Öffnung 27 kann dann die gereinigte Luft von dem Reinraum 18, welcher von dem Gehäusedeckel 25 gebildet wird, in die von dem Stutzen 21 gebildete Reinseite 19 strömen. Das Filterelement 16 ist rechteckförmig ausgeführt und trennt den Rohraum 17 dichtend von dem Reinraum 18, wobei es parallel zu der Systemplatte 10 in dem Filtergehäuse angeordnet ist.

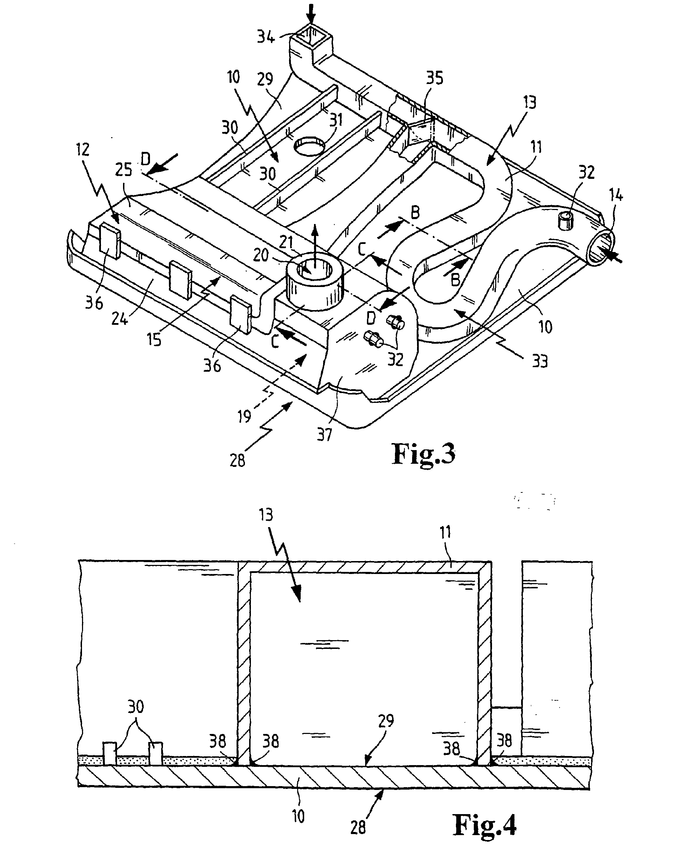

In Figur 3 ist ein Luftfiltersystem in einer Variante dargestellt. Das Luftfiltersystem weist eine Systemplatte 10 aus Kunststoff auf, welche eine optisch ansprechend gestaltete Oberseite 28 und eine funktionsorientierte Unterseite 29, aufweist. Die Systemplatte 10 ist leicht gewölbt ausgeführt und besitzt abgewinkelte Ränder. Die Oberseite 28 der Systemplatte kann z.B. poliert oder strukturiert ausgeführt sein, wobei Symbole wie zum Beispiel ein Firmenlogo aufgebracht werden können. Die Unterseite 29 verfügt über Rippen 30, welche sowohl der Stabilität, als auch der Verbindung mit den an die Systemplatte 10 angeordneten Bauteile, dienen können. Die Rippen 30 verlaufen geradlinig, wobei sie bei anderen Ausführungen z.B. der Kontur der ersten Halbschale 11 oder des Filtergehäuses 12 folgen können. Weiterhin verfügt die Systemplatte 10 über eine Aussparung 31, durch welche z.B. Anschlussbauteile hindurchragen können oder Wartungsarbeiten, an einer darunter angeordneten Brennkraftmaschine durchgeführt werden können.

Auf die Unterseite 29 der Systemplatte 10 ist eine erste Halbschale 11 im Vibrationsschweißverfahren dichtend aufgebracht, wodurch eine Rohseite 13 gebildet wird. Die erste Halbschale 11 umschließt einen Rohlufteinlass 14 vollständig, wodurch der Rohlufteinlass 14 auch entfernt von der Systemplatte 10 angeordnet sein kann. Die Rohseite 13 weist in einem Teilbereich einen Omegabogen 33 auf, wodurch die Luftführung beeinflusst und eine akustische Wirkung erzielt wird. Auf der Rohseite 13 ist ein Anschluss 32 vorgesehen, an welchen z.B. eine Entlüftungsleitung (nicht dargestellt) angeschlossen sein kann. Bei diesem Ausführungsbeispiel ist die erste Halbschale 11 derart ausgebildet, dass sie einen zweiten Rohlufteinlass 34 umschließt. Der zweite Rohlufteinlass 34 mündet ebenfalls auf die Rohseite 13, wobei eine Klappe 35 zum Trennen oder Verbinden der Rohlufteinlässe 14, 34 vorgesehen ist. Hierzu ist die Klappe 35 in einem T-förmig ausgestalteten Bereich der Rohseite 13 angeordnet. In einer ersten Endstellung trennt die Klappe den zweiten Rohlufteinlass 34 von einem nachfolgenden Filtergehäuse 12 und in einer zweiten Endstellung (strichpunktiert dargestellt) trennt die Klappe 35 den ersten Rohlufteinlass 14 von dem nachfolgenden Filtergehäuse 12. Durch die Klappe 35 kann somit Luft aus unterschiedlichen Bereichen angesaugt werden.

Die Rohseite 13 mündet in einen, von dem Filtergehäuse 12 gebildeten Filterraum 15. In dem Filterraum 15 ist ein Filterelement 16 (nicht dargestellt) angeordnet. Das Filtergehäuse 12 weist einen Gehäusedeckel 25 und ein Unterteil 24 auf, wobei der Gehäusedeckel 25 mit einer Schnappverbindung 36 an einem Unterteil 24 befestigt ist. Die Rohseite 13 kann über eine lösbare Verbindung mit dem Gehäusedeckel 25 oder mit einer unlösbaren Verbindung mit dem Unterteil 24 verbunden sein. Das Unterteil 24 ist dichtend mit der Systemplatte 10 verschweißt. An den Filterraum 15 schließt sich reinluftseitig eine zweite Halbschale 37 an, welche eine Reinseite 19 umschließt. An der zweiten Halbschale 37 sind Anschlüsse 32 vorgesehen, durch welche z.B. Entlüftungsgase in das Luftfiltersystem eingeleitet werden können. Die zweite Halbschale 37 verfügt über einen Stutzen 21, welcher als separates Bauteil ausgeführt ist. Der Stutzen 21 umschließt einen Reinluftauslass 20, welcher die Systemplatte 10 nicht berührt. Bei diesem Ausführungsbeispiel ist das Unterteil 24 mit der zweiten Halbschale 37 einteilig ausgeführt, wodurch die Teileanzahl reduziert ist.

In Figur 4 ist ein Luftfiltersystem im Schnitt entlang der Schnittlinie B-B gemäß Figur 3 dargestellt. Der Figur 3 entsprechende Bauteile sind mit gleichen Bezugszeichen versehen. Die erste Halbschale 11 ist dichtend mit der Systemplatte 10 verschweißt, wodurch die Rohseite 13 umschlossen wird. Die Schweißnaht 38, welche die Systemplatte 10 mit der ersten Halbschale 11 verbindet, kann z.B. durch Reibschweißen oder Ultraschallschweißen erzeugt sein. Damit z.B. die erste Halbschale 11 exakt auf der Systemplatte 10 positioniert werden kann, kann die Unterseite 29 der Systemplatte 10 Vertiefungen (nicht dargestellt) aufweisen, welche ein Einstecken z.B. der ersten Halbschale 11 ermöglichen. Dadurch kann der Schweißvorgang vereinfacht werden.

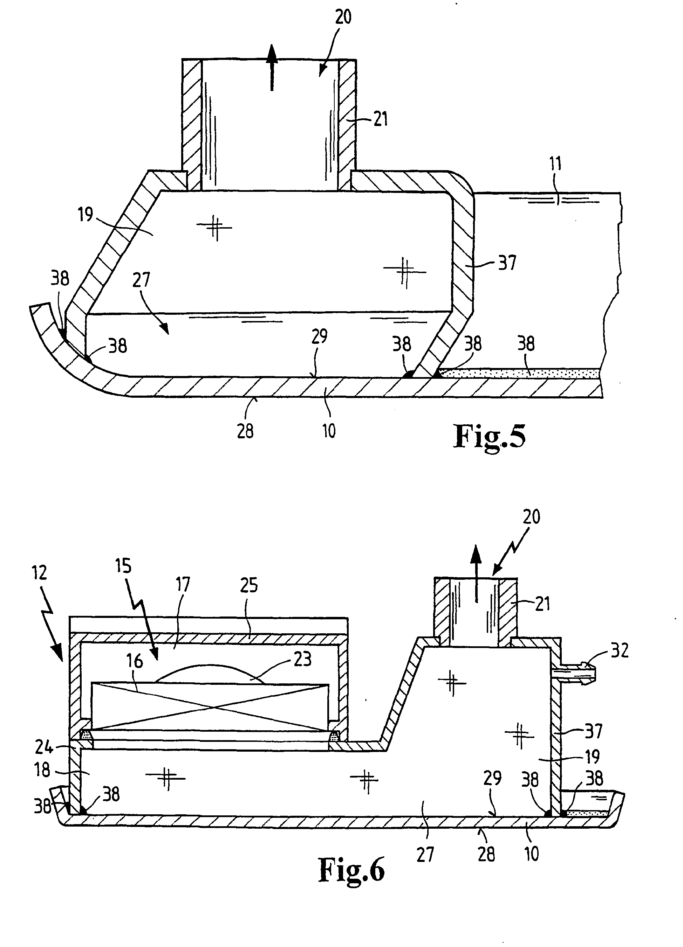

In Figur 5 ist ein Luftfiltersystem im Schnitt entlang der Schnittlinie C-C gemäß Figur 3 dargestellt. Der Figur 3 entsprechende Bauteile sind mit gleichen Bezugszeichen versehen. Die zweite Halbschale 37 ist dichtend mit der Systemplatte 10 verschweißt, wodurch die Reinseite 19 gebildet wird. Die gereinigte Luft gelangt von der Reinseite 19 in einen Stutzen 21, welcher dichtend mit der zweiten Halbschale 37 verbunden ist. Bei anderen Ausführungen kann der Stutzen 21 auch einteilig mit der zweiten Halbschale 37 ausgeführt sein. Durch den Reinluftauslass 20 kann die gereinigte Luft aus dem Luftfiltersystem austreten und z.B. in die Brennkraftmaschine (nicht dargestellt) eintreten.

In Figur 6 ist ein Luftfiltersystem im Schnitt entlang der Schnittlinie D-D gemäß Figur 3 dargestellt. Der Figur 3 entsprechende Bauteile sind mit gleichen Bezugszeichen versehen. In dem Filterraum 15 ist ein Filterelement 16 eingebracht, welches dichtend zwischen den Gehäusedeckel 25 und das Unterteil 24 eingebracht ist. Das Unterteil 24 besitzt keinen Boden, es ist als Rahmen ausgeführt. Dadurch besitzt der Reinraum 18 einen direkten Kontakt zu der Systemplatte 10. Der Gehäusedeckel 25 besitzt eine erste Öffnung 23 durch welche die zu filternde Luft in den Rohraum 17 eintreten kann. Die erste Öffnung 23 wird außerhalb des Filtergehäuses 12 von der ersten Halbschale 11 umschlossen.

## Patentansprüche

1. Luftfiltersystem, insbesondere für eine Brennkraftmaschine, aufweisend eine Systemplatte (10), einen Rohlufteinlass (14), eine Rohseite (13), die in einen Filterraum (15) mündet, ein Filterelement (16), eine Reinseite (19) und einen Reinluftauslass (20),
- wobei das Filterelement (16) in dem Filterraum (15) angeordnet ist und den Rohlufteinlass (14) dichtend von dem Reintuftauslass (20) trennt,
- wobei eine Vorrichtung durch die Systemplatte (10) zumindest teilweise abdeckbar ist und die Systemplatte (10) eine, insbesondere optisch ansprechende, Oberseite und eine, insbesondere funktionsorientiert ausgestaltete, Unterseite aufweist,
- wobei die Rohseite (13) durch eine erste Halbschale (11) in Verbindung mit der Systemplatte (10) gebildet ist, und die erste Halbschale (11) mittels einer unlösbaren Verbindung dichtend mit der Systemplatte (10) verbunden ist,
- wobei der Filterraum (15) durch ein, mit der Systemplatte (10) verbundenes Filtergehäuse (12) gebildet ist,
**dadurch gekennzeichnet, dass**
das Filtergehäuse (12) unlösbar mit der Systemplatte (10) verbunden ist.

2. Luftfiltersystem, nach Anspruch 1, **dadurch gekennzeichnet, dass** die Reinseite (19) durch eine zweite Halbschale (37) in Verbindung mit der Systemplatte (10) gebildet ist.

3. Luftfiltersystem nach einem der vorangehenden Ansprüche, **dadurch gekennzeichnet, dass** die unlösbare Verbindung eine Schweißnaht (38) ist.

4. Luftfiltersystem nach einem der vorangehenden Ansprüche, **dadurch gekennzeichnet, dass** das Filtergehäuse (12) durch einen Gehäuserahmen mit einem Gehäusedeckel (25) und die Systemplatte (10) gebildet ist, wobei der Gehäuserahmen mit der Systemplatte (10) verschweißt ist.

5. Luftfiltersystem nach einem der vorangehenden Ansprüche, **dadurch gekennzeichnet, dass** an der Systemplatte Rippen angeordnet sind.

6. Luftfiltersystem nach einem der vorangehenden Ansprüche, **dadurch gekennzeichnet, dass** die Rohseite (13) über einen akustisch wirksamen Luftführungsbogen (33) verfügt.

7. Luftfiltersystem nach einem der vorangehenden Ansprüche, **dadurch gekennzeichnet, dass** die Rohseite (13) über einen zweiten Rohlufteinlass (34) verfügt, welcher mittels einer Klappe (35) öffenbar ist.

8. Luftfiltersystem nach einem der vorangehenden Ansprüche, **dadurch gekennzeichnet, dass** das Befestigungspunkte zur Fixierung des Luftfiltersystems an einer angrenzenden Brennkraftmaschine vorgesehen sind.

9. Luftfiltersystem nach einem der vorangehenden Ansprüche, **dadurch gekennzeichnet dass** die Halbschalen (11), (37) und die Systemplatte (10) aus thermoplastischem Kunststoff bestehen.

## Claims

1. Air filter system, more especially for an internal combustion engine, said air filter system including a system plate (10), an unfiltered air inlet (14), an unfiltered side (13) that extends into a filter chamber (15), a filter element (16), a filtered side (19) and a filtered air outlet (20),
- wherein the filer element (16) is disposed in the filter chamber (16) and separates the unfiltered air inlet (14) in a sealing manner from the filtered air outlet (20),
- wherein an apparatus is at least partially coverable by the system plate (10) and the system plate (10) includes a top side that is more especially visually responsive and a bottom side that is configured more especially in a function-orientated manner,
- wherein the unfiltered side (13) is formed by a first half shell (11) in conjunction with the system plate (10), and the first half shell (11) is connected through the intermediary of a non-detachable connection in a sealing manner to the system plate (10),
- wherein the filter space (15) is formed by a filter housing (12) that is connected to the system plate (10),
**characterised in that**
the filter housing (12) is connected in a non-detachable manner to the system plate (10).

2. Air filter system, according to claim 1, **characterised in that** the filtered side (19) is formed by a second half shell (37) in conjunction with the system plate (10).

3. Air filter system according to one of the preceding claims, **characterised in that** the non-detachable connection is a weld seam.

4. Air filter system according to one of the preceding claims, **characterised in that** the filter housing (12) is formed by a housing frame with a housing cover (25) and the system plate (10), wherein the housing frame is welded to the system plate (10).

5. Air filter system according to one of the preceding claims, **characterised in that** ribs are disposed on the system plate.

6. Air filter system according to one of the preceding claims, **characterised in that** the unfiltered side (13) has an acoustically effective air conducting curve (33).

7. Air filter system according to one of the preceding claims, **characterised in that** the unfiltered side (13) has a second unfiltered air inlet (34), which is openable through the intermediary of a flap (35).

8. Air filter system according to one of the preceding claims, **characterised in that** the fastening points are provided to secure the air filter system to an adjacent internal combustion engine.

9. Air filter system according to one of the preceding claims, **characterised in that** the half shells (11, 37) and the system plate (10) are produced from thermoplastic plastics material.

## Revendications

1. Système de filtre à air, notamment pour un moteur à combustion interne, présentant une plaque système (10), une admission d'air non filtré (14), un côté non filtré (13) débouchant dans une chambre de filtrage (15), un élément filtrant (16), un côté pur (19) et une évacuation d'air pur (20),
- l'élément filtrant (16) étant placé dans la chambre de filtrage (15) et séparant hermétiquement l'admission d'air non filtré (14) de l'évacuation d'air pur (20),
- un dispositif pouvant être couvert au moins partiellement par la plaque système (10) et la plaque système (10) présentant une face supérieure correspondante notamment sur le plan optique et une face inférieure conçue notamment fonctionnellement,
- le côté non filtré (13) étant formé par une première demi-coquille (11) en association avec la plaque système (10) et la première demi-coquille (11) étant reliée hermétiquement à la plaque système à l'aide d'une liaison inamovible,
- la chambre de filtrage (15) étant formée par un carter de filtre (12) relié à la plaque système (10,
**caractérisé en ce que** le carter de filtre (12) est relié de manière inamovible à la plaque système (10).

2. Système de filtre à air selon la revendication 1, **caractérisé en ce que** le côté pur (19) est formé par une deuxième demi-coquille (37) en association avec la plaque système (10).

3. Système de filtre à air selon l'une quelconque des revendications précédentes, **caractérisé en ce que** la liaison inamovible est une soudure (38).

4. Système de filtre à air selon l'une quelconque des revendications précédentes, **caractérisé en ce que** le carter de filtre (12) est formé par un cadre du carter avec un couvercle du carter (25) et la plaque système (10), le cadre du carter étant soudé à la plaque système (10),

5. Système de filtre à air selon l'une quelconque des revendications précédentes, **caractérisé en ce que** des nervures sont disposées sur la plaque système.

6. Système de filtre à air selon l'une quelconque des revendications précédentes, **caractérisé en ce que** le côté non filtré (13) est doté d'un arc de déflection d'air (33) efficace sur le plan acoustique.

7. Système de filtre à air selon l'une quelconque des revendications précédentes, **caractérisé en ce que** le côté non filtré (13) est doté d'une deuxième admission d'air non filtré (34) pouvant être ouverte par un clapet (35).

8. Système de filtre à air selon l'une quelconque des revendications précédentes, **caractérisé en ce que** des points de fixation pour fixer le système de filtre à air sont prévus sur un moteur à combustion interne adjacent.

9. Système de filtre à air selon l'une quelconque des revendications précédentes, **caractérisé en ce que** les demi-coquilles (11), (37) et la plaque système (10) se composent de matière synthétique thermoplastique.
